# EUROPEAN PATENT APPLICATION

(11) **EP 4 459 882 A1**
(43) Date of publication of application: **06.11.2024**
(21) Application number: 22915161.8
(22) Date of filing: 30.12.2022
(51) Int. Cl.: H04B 1/7136

(54) **FREQUENCY HOPPING METHOD AND APPARATUS FOR UPLINK TRANSMISSION, INDICATION METHOD AND APPARATUS, AND TERMINAL AND NETWORK SIDE DEVICE**

(30) Priority: 31.12.2021 CN 202111672293
(71) Applicant: VIVO MOBILE COMMUNICATION CO., LTD., Dongguan, Guangdong 523863 (CN)
(72) Inventor: LI, Na, Dongguan, Guangdong 523863 (CN); WANG, Lihui, Dongguan, Guangdong 523863 (CN)
(74) Representative: Conti, Marco
(86) International application number: PCT/CN2022/143846
(87) International publication number: WO 2023/125912

(57) **Abstract**

This application pertains to the field of communications technologies, and discloses a frequency hopping method and apparatus for an uplink transmission, an information indication method and apparatus, a terminal, and a network-side device. The frequency hopping method for an uplink transmission includes: obtaining, by a terminal, first information; and determining, based on the first information, whether to perform frequency hopping for the uplink transmission, and/or determining, based on the first information, information related to a frequency hopping position when frequency hopping is performed for the uplink transmission, where the first information includes at least one of the following: indication information of a network-side device; and configuration information of a frequency domain resource type.

## Description

### CROSS-REFERENCE TO RELATED APPLICATIONS

This application claims priority to Chinese Patent Application No. 202111672293.4, filed in China on December 31, 2021, which is incorporated herein by reference in its entirety.

### TECHNICAL FIELD

This application pertains to the field of communications technologies, and specifically relates to a frequency hopping method and apparatus for an uplink transmission, an information indication method and apparatus, a terminal, and a network-side device.

### BACKGROUND

In the prior art, frequency hopping in frequency domain for an uplink transmission such as a physical uplink control channel (Physical Uplink Control Channel, PUCCH) transmission is usually configured by using radio resource control (Radio Resource Control, RRC) signaling, where a starting physical resource block (Physical Resource Block, PRB) index in each hop is configured by using the RRC signaling and is relative to a starting position of a bandwidth part (Bandwidth Part, BWP). Therefore, flexibility of an existing frequency hopping scheme for an uplink transmission is poor.

### SUMMARY

Embodiments of this application provide a frequency hopping method and apparatus for an uplink transmission, an information indication method and apparatus, a terminal, and a network-side device to resolve a problem that flexibility of an existing frequency hopping scheme for an uplink transmission is poor.

According to a first aspect, a frequency hopping method for an uplink transmission is provided. The method is applied to a terminal and includes:
obtaining, by the terminal, first information; and
determining, by the terminal based on the first information, whether to perform frequency hopping for the uplink transmission, and/or determining, based on the first information, information related to a frequency hopping position when frequency hopping is performed for the uplink transmission, where
the first information includes at least one of the following:
   indication information of a network-side device; and
   configuration information of a frequency domain resource type.

According to a second aspect, an information indication method is provided. The method is applied to a network-side device and includes:
sending, by the network-side device, indication information to a terminal, where
the indication information is used by the terminal to determine whether to perform frequency hopping for an uplink transmission, and/or determine information related to a frequency hopping position when frequency hopping is performed for the uplink transmission.

According to a third aspect, a frequency hopping apparatus for an uplink transmission is provided. The apparatus is applied to a terminal and includes:
an obtaining module, configured to obtain first information; and
a determining module, configured to determine, based on the first information, whether to perform frequency hopping for the uplink transmission, and/or determine, based on the first information, information related to a frequency hopping position when frequency hopping is performed for the uplink transmission, where
the first information includes at least one of the following:
   indication information of a network-side device; and
   configuration information of a frequency domain resource type.

According to a fourth aspect, an information indication apparatus is provided. The apparatus is applied to a network-side device and includes:
a sending module, configured to send indication information to a terminal,
where the indication information is used by the terminal to determine whether to perform frequency hopping for an uplink transmission, and/or determine information related to a frequency hopping position when frequency hopping is performed for the uplink transmission.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The processor is configured to: obtain first information; and determine, based on the first information, whether to perform frequency hopping for an uplink transmission, and/or determine, based on the first information, information related to a frequency hopping position when frequency hopping is performed for the uplink transmission, where the first information includes at least one of the following: indication information of a network-side device; and configuration information of a frequency domain resource type.

According to a seventh aspect, a network-side device is provided. The network-side device includes a processor and a memory. The memory stores a program or instructions capable of running on the processor. When the program or instructions are executed by the processor, the steps of the method according to the second aspect are implemented.

According to an eighth aspect, a network-side device is provided. The network-side device includes a processor and a communication interface. The communication interface is configured to send indication information to a terminal, where the indication information is used by the terminal to determine whether to perform frequency hopping for an uplink transmission, and/or determine information related to a frequency hopping position when frequency hopping is performed for the uplink transmission.

According to a ninth aspect, a communications system is provided and includes a terminal and a network-side device. The terminal may be configured to perform the steps of the frequency hopping method for an uplink transmission according to the first aspect. The network-side device may be configured to perform the steps of the information indication method according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor. The processor is configured to run a program or instructions to implement the steps of the method according to the first aspect or implement the steps of the method according to the second aspect.

According to a twelfth aspect, a computer program product is provided. The computer program product is stored in a storage medium. The computer program product is executed by at least one processor to implement the steps of the method according to the first aspect or implement the steps of the method according to the second aspect.

In the embodiments of this application, based on the indication information of the network-side device and/or the configuration information of the frequency domain resource type, the terminal can determine whether to perform frequency hopping for the uplink transmission, and/or determine the information related to the frequency hopping position when frequency hopping is performed for the uplink transmission. Therefore, in comparison with an existing frequency hopping scheme for an uplink transmission, flexibility of frequency hopping for the uplink transmission can be improved. Further, because the information related to the frequency hopping position when frequency hopping is performed for the uplink transmission is determined based on the indication information of the network-side device and/or the configuration information of the frequency domain resource type, uplink resource unavailability can be avoided or reduced, and particularly, in a flexible or full duplex (flexible/full duplex) system, a problem that an uplink transmission cannot be performed due to resource unavailability can be greatly alleviated, and system efficiency can be improved.

### BRIEF DESCRIPTION OF DRAWINGS

FIG. 1 is a block diagram of a wireless communications system to which an embodiment of this application may be applied;
FIG. 2 is a flowchart of a frequency hopping method for an uplink transmission according to an embodiment of this application;
FIG. 3 is a flowchart of an information indication method according to an embodiment of this application;
FIG. 4 is a first schematic diagram of slots according to an embodiment of this application;
FIG. 5 is a second schematic diagram of slots according to an embodiment of this application;
FIG. 6 is a schematic structural diagram of a frequency hopping apparatus for an uplink transmission according to an embodiment of this application;
FIG. 7 is a schematic structural diagram of an information indication apparatus according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

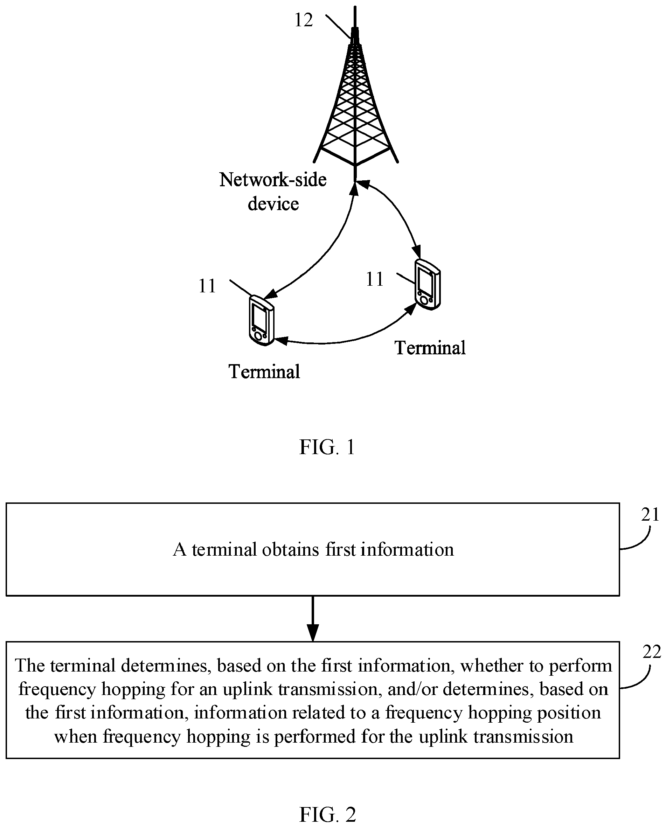

FIG. 1 is a block diagram of a wireless communications system to which an embodiment of this application may be applied. The wireless communications system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

Optionally, application scenarios of the embodiments of this application may include but are not limited to flexible or full duplex (flexible/full duplex) or duplex evolution (duplex evolution) systems, or the like. Characteristics of flexible/full-duplex/duplex evolution on a network side and half-duplex operations on a user/terminal side may include:
(1) for a symmetric spectrum in frequency division duplexing (Frequency Division Duplexing, FDD), a downlink or uplink transmission may be semi-statically configured or dynamically indicated in some slots or on some symbols in an uplink or downlink spectrum in FDD;
(2) for an asymmetric spectrum in time division duplexing (Time Division Duplexing, TDD), both an uplink transmission and downlink reception may be semi-statically configured or dynamically indicated on different frequency domain resources in some slots or on some symbols in TDD; and
(3) a half-duplex terminal can perform only an uplink transmission or downlink reception at the same time, that is, the terminal cannot receive and send signals at the same time.

A frequency hopping method and apparatus for an uplink transmission, an information indication method and apparatus, a terminal, and a network-side device provided in the embodiments of this application are hereinafter described in detail by using some embodiments and application scenarios thereof with reference to the accompanying drawings.

FIG. 2 is a flowchart of a frequency hopping method for an uplink transmission according to an embodiment of this application. The method is performed by a terminal. As shown in FIG. 2, the method includes the following steps.

Step 21: The terminal obtains first information.

Step 22: The terminal determines, based on the first information, whether to perform frequency hopping for the uplink transmission, and/or determines, based on the first information, information related to a frequency hopping position when frequency hopping is performed for the uplink transmission.

In this embodiment, the first information may include at least one of the following:
indication information of a network-side device; and
configuration information of a frequency domain resource type.

In some embodiments, the network-side device such as a base station may dynamically send the indication information to the terminal to indicate whether to perform frequency hopping for the uplink transmission, and/or indicate the information related to the frequency hopping position when frequency hopping is performed for the uplink transmission.

In some embodiments, the information related to the frequency hopping position may include but is not limited to at least one of the following: the frequency hopping position, a reference position of the frequency hopping position, a frequency hopping offset between two adj acent hops, and the like. The frequency hopping position may be indicated based on a starting physical resource block (Physical Resource Block, PRB) index. For example, a quantity of PRBs of a PUCCH may be predefined, or configured by RRC, or determined according to a predefined rule. The terminal may determine, based on a starting PRB position and the quantity of PRBs, all PRB positions in a PUCCH transmission.

In some embodiments, the uplink transmission relates to at least one of the following: a physical uplink control channel (Physical Uplink Control Channel, PUCCH), a physical uplink shared channel (Physical uplink shared channel, PUSCH), a sounding reference signal (Sounding Reference Signal, SRS), and the like.

In the frequency hopping method in this embodiment of this application, based on the indication information of the network-side device and/or the configuration information of the frequency domain resource type, the terminal can determine whether to perform frequency hopping for the uplink transmission, and/or determine the information related to the frequency hopping position when frequency hopping is performed for the uplink transmission. Therefore, in comparison with an existing frequency hopping scheme for an uplink transmission, flexibility of frequency hopping for the uplink transmission can be improved. Further, because the information related to the frequency hopping position when frequency hopping is performed for the uplink transmission is determined based on the indication information of the network-side device and/or the configuration information of the frequency domain resource type, uplink resource unavailability can be avoided or reduced, and particularly, in a flexible or full duplex (flexible/full duplex) system, a problem that an uplink transmission cannot be performed due to resource unavailability can be greatly alleviated. The method better adapts to flexible uplink and downlink configurations in the flexible/full duplex system and improves system efficiency.

Optionally, the indication information may be carried by downlink control information (Downlink Control Information, DCI). In other words, the network-side device may send the indication information to the terminal by using the DCI. Correspondingly, the terminal receives or obtains, by using the DCI, the indication information sent by the network-side device.

Further, the DCI may be either of the following:
DCI for scheduling the uplink transmission, where for example, the base station indicates, by using the indication information in the DCI, frequency hopping or non frequency hopping for an uplink transmission, and in this case, the DCI may be DCI for scheduling the uplink transmission; or the base station indicates, by using the indication information in the DCI, a starting PRB index when frequency hopping is performed for an uplink transmission, and in this case, the DCI may be DCI for scheduling the uplink transmission; and
layer 1 signaling, where a sending time of the layer 1 signaling is before a sending time of the uplink transmission, and a predetermined time interval requirement is met between the layer 1 signaling and the uplink transmission; the predetermined time interval may be set based on an actual requirement, and is not limited.

In some embodiments, the layer 1 signaling optionally may be downlink grant (DL grant) dedicated DCI, uplink grant (UL grant) dedicated DCI, frequency modulation indication dedicated DCI, or another type of DCI, and is not limited. The DL grant dedicated DCI is, for example, a format 1_0, 1_1, 1 2, 4_0, 4_1, or 4_2. The UL grant dedicated DCI is, for example, a DCI format 0_0, 0_1, or 0_2. The frequency modulation indication dedicated DCI is, for example, DCI dedicated to indicating information of frequency hopping for an uplink transmission.

In some embodiments, when the layer 1 signaling is used to carry indication information for indicating a starting PRB index of a first hop and/or a second hop of the PUCCH, the PUCCH may be PUCCHs of all types or a PUCCH of a specific type. The PUCCH of the specific type is, for example, a hybrid automatic repeat request-acknowledgement (Hybrid Automatic Repeat Request-ACK, HARQ-ACK) PUCCH, a scheduling request (Scheduling Request, SR) PUCCH, or a channel state information (Channel State Information, CSI) PUCCH. Alternatively, when the layer 1 signaling is used to carry indication information for indicating a starting PRB index of a first hop and/or a second hop of an uplink transmission, the uplink transmission may be uplink transmissions of all types or an uplink transmission of a specific type. The uplink transmission of the specific type is, for example, the PUCCH, the PUSCH, or the SRS.

In this embodiment of this application, the network-side device may indicate frequency hopping for the uplink transmission in different manners. The indication information may indicate different content. The following describes content in different cases.

### Case 1

In case 1, the indication information includes first indication information, and the first indication information is used to indicate whether to perform frequency hopping for the uplink transmission. In this way, the terminal can determine, based on the first indication information, whether to perform frequency hopping for the uplink transmission, that is, determine to perform frequency hopping or not to perform frequency hopping for the uplink transmission.

In some embodiments, the base station may dynamically indicate whether to perform frequency hopping for the PUCCH.

In some other embodiments, the base station may dynamically indicate whether to perform frequency hopping for the SRS.

### Case 2

In case 2, the indication information includes second indication information, and the second indication information is used to indicate a starting PRB index of at least one hop of the uplink transmission. In this way, the terminal may determine, based on the second indication information, the starting PRB index of at least one hop of the uplink transmission, and further determine the frequency hopping position of the uplink transmission.

Optionally, the second indication information may be used to indicate a starting PRB index of a first hop and/or a second hop of the uplink transmission.

In some embodiments, the base station may dynamically indicate a starting PRB index of a first hop and/or a second hop of the PUCCH. For example, when the starting PRB index of the first hop of the PUCCH is configured by using higher layer signaling, the starting PRB index of the second hop of the PUCCH is dynamically indicated by the base station; or conversely, the starting PRB index of the first hop of the PUCCH is dynamically indicated by the base station, and the starting PRB index of the second hop of the PUCCH is configured by using higher layer signaling or determined according to a predefined rule. For example, a frequency hopping offset between the first hop and the second hop may be configured by using higher layer signaling, and the terminal determines the starting PRB index of the second hop based on the starting PRB index of the first hop and the frequency hopping offset.

In some embodiments, the base station may dynamically indicate a starting PRB index of a first hop and/or a second hop of the PUSCH.

Optionally, the second indication information may be used to indicate a starting PRB index of an m^{th} hop of the uplink transmission, where the m^{th} hop is at least one of all hops of the uplink transmission, the starting PRB index of the m^{th} hop is at least one of a plurality of PRB indexes configured for the terminal, and m is a positive integer. In other words, the m^{th} hop may be any one of all the hops of the uplink transmission, or may be a plurality of hops of all the hops of the uplink transmission, or may be all the hops of the uplink transmission.

Optionally, the second indication information is used to indicate a starting PRB index combination of at least two hops of the uplink transmission, where the starting PRB index combination of the at least two hops is one of a plurality of PRB index combinations configured for the terminal. For example, the second indication information may indicate a starting PRB index pair of two hops of the uplink transmission, where the two hops are, for example, the first hop and the second hop, or may indicate a starting PRB index combination of a combination of more than two hops such as three hops or four hops of the uplink transmission.

In some embodiments, for an SRS transmission, if the transmission has a plurality of hops, the base station may indicate a starting PRB index combination of a plurality of hops by using the second indication information.

In some embodiments, the second indication information may be used to indicate the starting PRB index of the first hop of the uplink transmission such as the PUCCH/PUSCH/SRS, where the starting PRB index of the first hop is one of a plurality of PRB indexes configured for the terminal.

In some embodiments, the second indication information may be used to indicate the starting PRB index of the second hop of the uplink transmission such as the PUCCH/PUSCH/SRS, where the starting PRB index of the second hop is one of a plurality of PRB indexes configured for the terminal.

In some embodiments, for the SRS transmission, if the transmission has four hops, the base station may indicate a starting PRB index of each of the four hops, for example, indicate the following combination (PRB index 1, PRB index 2, PRB index 3, and PRB index 4), where PRB indexes 1 to 4 correspond to starting PRB indexes of the first to the fourth hops.

In some embodiments, the second indication information may be used to indicate a starting PRB index pair of the first hop and the second hop of the uplink transmission such as the PUCCH/PUSCH/SRS, where the starting PRB index pair of the first hop and the second hop is one of a plurality of PRB index pairs configured for the terminal.

For example, if the base station configures N PRB index values by using higher layer signaling such as RRC signaling, the base station indicates, by using DCI, one of the N values as the starting PRB index of the second hop when frequency hopping is performed for the PUCCH. The DCI may be DCI for scheduling the PUCCH or is layer 1 (layer 1, L1) signaling meeting a specific time interval requirement before the PUCCH transmission, that is, the time interval is greater than or equal to a specific time interval.

### Case 3

In case 3, the indication information includes third indication information, and the third indication information is used to indicate a reference position of a starting PRB index of at least one hop of the uplink transmission. For example, the third indication information may be used to indicate a reference position of a starting PRB index of a first hop and/or a second hop of the uplink transmission such as the PUCCH/PUSCH/SRS.

In some embodiments, the base station may dynamically indicate the reference position of the starting PRB index of the first hop and/or the second hop of the PUCCH.

Optionally, the reference position of the starting PRB index may be any one of the following:
a lowest PRB index of a current BWP and/or carrier, where the current BWP may be understood as an active uplink BWP or an active BWP currently corresponding to the terminal, and different frequency domain resources on the BWP may be at least one of uplink UL, downlink DL, and flexible F;
a lowest PRB index of an available uplink resource; and
a highest PRB index of the available uplink resource, where
a time-frequency domain resource type of the available uplink resource may be configured as uplink UL and/or flexible F. In addition, a time domain resource of the available uplink resource may be configured as a UL or F symbol, a slot, or the like.

In some embodiments, reference positions of starting PRB indexes of the first hop and the second hop may be both the lowest PRB index of the current BWP and/or carrier, or both the lowest PRB index of the available uplink resource, or both the highest PRB index of the available uplink resource.

In some other embodiments, the reference position of the starting PRB index of the first hop may be the lowest PRB index of the available uplink resource, and the reference position of the starting PRB index of the second hop may be the highest PRB index of the available uplink resource; or the reference position of the starting PRB index of the first hop may be the highest PRB index of the available uplink resource, and the reference position of the starting PRB index of the second hop may be the lowest PRB index of the available uplink resource.

### Case 4

In case 4, the indication information includes fourth indication information, and the fourth indication information is used to indicate a frequency hopping offset (Frequency Hopping offset, FH offset) of an a^{th} hop of the uplink transmission relative to a b^{th} hop thereof, where a and b are positive integers. In this way, in a case that a starting PRB index of the a^{th} hop (or the b^{th} hop) is indicated, the starting PRB index of the b^{th} hop (or the a^{th} hop) may be obtained. For example, a value of x may be set to 1, and a value of y is set to 2; or a value of x is set to 2, and a value of y is set to 1.

In some embodiments, the base station may dynamically indicate a frequency hopping offset (FH offset) of a second hop of the PUSCH relative to a first hop thereof.

It should be noted that in a specific embodiment, the indication information may include at least one of the first indication information to the fourth indication information, so that the terminal determines, based on the received indication information, whether to perform frequency hopping for the uplink transmission, and/or determines, based on the received indication information, the information related to the frequency hopping position when frequency hopping is performed for the uplink transmission. The at least one of the first indication information to the fourth indication information may be carried by DCI.

Optionally, in addition to determining, based on the first indication information, whether to perform frequency hopping for the uplink transmission, the terminal may determine, based on the configuration information of the network-side device, whether to perform frequency hopping for the uplink transmission. For example, the base station may configure, by using higher layer signaling, whether to perform frequency hopping for the uplink transmission, where the higher layer signaling may include but is not limited to system information and/or RRC information or the like.

In this embodiment of this application, in a case that the first information includes the configuration information of the frequency domain resource type, step 22 may include:
the terminal determines a starting PRB index of a first hop and/or a second hop of the uplink transmission based on the configuration information of the frequency domain resource type;
   and/or
the terminal determines a frequency hopping offset of a second hop of the uplink transmission relative to a first hop thereof based on the configuration information of the frequency domain resource type.

Optionally, the reference position of the starting PRB index of the first hop and/or the second hop of the uplink transmission may be any one of the following:
a lowest PRB index of a current BWP and/or carrier, where the current BWP may be understood as a BWP currently corresponding to the terminal, and different frequency domain resources on the BWP may be at least one of uplink UL, downlink DL, and flexible F;
a lowest PRB index of an available uplink resource; and
a highest PRB index of the available uplink resource.

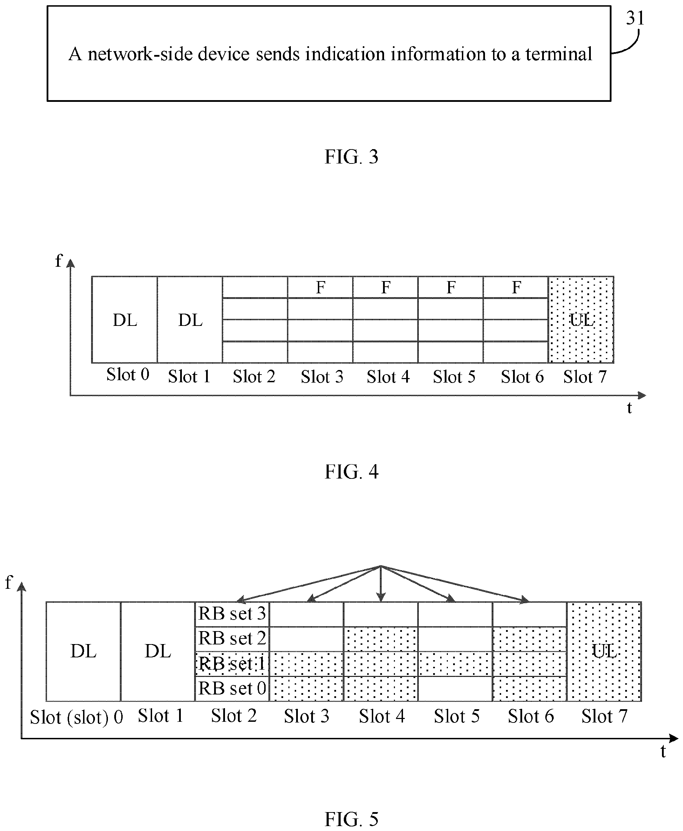

For example, the terminal determines the starting PRB index of the first hop and/or the second hop of the uplink transmission based on the configuration information of the frequency domain resource type thereof. startingPRB_FD represents the starting PRB index of the first hop, and secondHopPRB_FD represents the starting PRB index of the second hop. In this case, reference PRB positions (that is, a position with an index 0, or a position at which the foregoing PRB index starts) of the startingPRB_FD and secondHopPRB_FD may be any one of the following:
(1) the startingPRB_FD and secondHopPRB_FD are both relative to the lowest PRB index of the current BWP and/or carrier, where different frequency domain resources on the BWP may be at least one of uplink UL, downlink DL, and flexible F;
(2) the startingPRB_FD and secondHopPRB_FD are both relative to the lowest PRB index of the available UL resource, or both relative to the highest PRB index of the available UL resource, where a time domain resource of the available UL resource may be configured as a UL/F symbol or slot or the like, and a frequency domain resource type of the available UL resource may be configured as uplink UL or flexible F; for example, as shown in FIG. 5, time domain resources in slots 2 to 7 are configured as UL or F, and some RB sets in slots 2 to 7 are configured as DL by using frequency format signaling; frequency domain resource types of RB set 1 in slots 2 to 7 are configured as UL, frequency domain resource types of RB set 2 in slots 4, 6, and 7 are configured as UL, frequency domain resource types of RB set 0 in slots 3, 4, 6, and 7 are configured as UL, and remaining RB sets are configured as DL; in this case, available UL resources are: in slot 2 and slot 5, available UL resources are RB set 1; in slot 3, available UL resources are RB set 0 and RB set 1; in slot 4 and slot 6, available UL resources are RB sets 0 to 3; and in slot 7, available UL resources are RB sets 0 to 3, that is, an entire BWP; and
(3) the startingPRB_FD is relative to the lowest PRB index of the available UL resource, and the secondHopPRB_FD is relative to the highest PRB index of the available UL resource; or the startingPRB_FD is relative to the highestPRB index of the available UL resource, and the secondHopPRB_FD is relative to the lowest PRB resource of the available UL resource, where the time domain resource of the available UL resource may be configured as a UL/F symbol or slot or the like, and the frequency domain resource type of the available UL resource may be configured as uplink UL or flexible F.

For example, if an index of a slot or sub-slot (sub-slot) in which the first hop is located is an even number, such as 0, 2, 4, ..., the startingPRB_FD is relative to the lowest PRB index of the available UL resource, and the secondHopPRB_FD is relative to the highest PRB index of the available UL resource; or if an index of a slot or sub-slot in which the first hop is located is an odd number, such as 1, 3, 5, ..., the startingPRB_FD is relative to the highest PRB index of the available UL resource, and the secondHopPRB_FD is relative to the lowest PRB index of the available UL resource.

For another example, if the secondHopPRB_FD is a positive integer and is an offset relative to the highest PRB index of the available UL resource, it may indicate the offset relative to the highest PRB index of the available UL resource, and its offset direction is a low-frequency direction; or if the secondHopPRB_FD is an offset relative to the highest PRB index of the available UL resource, its value may be a negative number, indicating the offset relative to the highest PRB index of the available UL resource, and its offset direction is a high-frequency direction, which is equivalent to a low-frequency offset because the value is a negative number.

In some embodiments, the available UL resource may be configured as UL/F by using semi-static signaling, and the frequency domain resource type is at least one of UL, flexible F, and unknown. The semi-static signaling is, for example, at least one of the following: time domain tdd-UL-DL-ConfigurationCommon, time domain tdd-UL-DL-ConfigurationDedicated, and a time domain slot format indicator (Slot Format Indicator, SFI).

Optionally, when determining the information related to the frequency hopping position when frequency hopping is performed for the uplink transmission, the terminal may perform at least one of the following:
determining, for each uplink transmission, the information related to the frequency hopping position when frequency hopping is performed for the uplink transmission; for example, determining, for each PUCCH, that is, per PUCCH, the information related to the frequency hopping position;
determining, for each time unit, the information related to the frequency hopping position when frequency hopping is performed for the uplink transmission, where the time unit may be a slot or a sub-slot or the like; and
determining, for each repetition of the uplink transmission, the information related to the frequency hopping position when frequency hopping is performed for the uplink transmission, where for example, for a PUCCH or PUSCH repetition (repetition), PRB indexes used by different repetitions may be different, or PRB indexes used by different repetitions may be the same, for example, determined by a first repetition.

Optionally, in a case that a frequency domain resource at an n^{th} hop of the uplink transmission is unavailable, a behavior of the terminal may include at least one of the following:
(1) the terminal determines that the frequency domain resource is incorrectly configured or scheduled; for example, for dynamically indicated frequency hopping FH in frequency domain, the terminal does not expect to perform the uplink transmission;
(2) the terminal abandons transmitting the n^{th} hop, where the "abandon (drop)" may also be expressed as "cancel (cancel)" or "does not transmit (does not transmit);
(3) the terminal abandons the uplink transmission, where "abandon(drop)" may also be expressed as "cancel (cancel)" or "does not transmit (does not transmit)"; it should be noted that if a repetition (repetition) of the uplink transmission is configured or indicated, the terminal may abandon the entire uplink transmission (including all repetitions), or the terminal may determine whether a transmission resource of each repetition is available; and if a transmission resource of a repetition is unavailable, the terminal abandons the repetition;
(4) the terminal delays the transmission of the n^{th} hop in time to a next available frequency domain resource; and
(5) the terminal translates the transmission of the n^{th} hop in frequency domain to the next available frequency domain resource, where
n is a positive integer, for example, equal to 1 or 2.

In some embodiments, in a case that the network-side device configures or dynamically indicates FH, if a frequency domain resource of a hop of the uplink transmission is unavailable, the terminal may perform the foregoing terminal behavior.

FIG. 3 is a flowchart of an information indication method according to an embodiment of this application. The method is performed by a network-side device. As shown in FIG. 3, the method includes the following step.

Step 31: The network-side device sends indication information to a terminal.

The indication information is used by the terminal to determine whether to perform frequency hopping for an uplink transmission, and/or determine information related to a frequency hopping position when frequency hopping is performed for the uplink transmission.

In some embodiments, the information related to the frequency hopping position may include but is not limited to at least one of the following: the frequency hopping position, a reference position of the frequency hopping position, a frequency hopping offset between two adjacent hops, and the like. The frequency hopping position may be indicated based on a starting physical resource block (Physical Resource Block, PRB) index (index).

In some embodiments, the uplink transmission relates to at least one of the following: a PUCCH, a PUSCH, an SRS, and the like.

In the information indication method in this embodiment of this application, the network-side device can send the indication information to the terminal, and the terminal determines, based on the indication information, whether to perform frequency hopping for the uplink transmission, and/or determines the information related to the frequency hopping position when frequency hopping is performed for the uplink transmission. Therefore, in comparison with an existing frequency hopping scheme for an uplink transmission, flexibility of frequency hopping for the uplink transmission can be improved. Further, because the terminal determines, based on the indication information of the network-side device, the information related to the frequency hopping position when frequency hopping is performed for the uplink transmission, uplink resource unavailability can be avoided, and particularly, in a flexible or full duplex (flexible/full duplex) system, a problem that an uplink transmission cannot be performed due to resource unavailability can be greatly alleviated. The method better adapts to flexible uplink and downlink configurations in the flexible/full duplex system and improves system efficiency.

Optionally, the indication information includes first indication information, and the first indication information is used to indicate whether to perform frequency hopping for the uplink transmission.

Optionally, the indication information includes second indication information, and the second indication information is used to indicate a starting PRB index of at least one hop of the uplink transmission. For example, the second indication information is used to indicate a starting PRB index of a first hop or a second hop of a PUCCH/PUSCH.

Optionally, the second indication information is used to indicate a starting PRB index of an m^{th} hop of the uplink transmission, where the m^{th} hop is at least one of all hops of the uplink transmission, the starting PRB index of the m^{th} hop is at least one of a plurality of PRB indexes configured for the terminal, and m is a positive integer.

Optionally, the second indication information is used to indicate a starting PRB index combination of at least two hops of the uplink transmission, where the starting PRB index combination of the at least two hops is one of a plurality of PRB index combinations configured for the terminal.

Optionally, the second indication information is used to indicate a starting PRB index of a first hop of the uplink transmission, where the starting PRB index of the first hop is one of a plurality of PRB indexes configured for the terminal.

Alternatively, the second indication information is used to indicate a starting PRB index of a second hop of the uplink transmission, where the starting PRB index of the second hop is one of a plurality of PRB indexes configured for the terminal.

Alternatively, the second indication information is used to indicate a starting PRB index pair of a first hop and a second hop of the uplink transmission, where the starting PRB index pair of the first hop and the second hop is one of a plurality of PRB index pairs configured for the terminal.

Optionally, the indication information includes third indication information, and the third indication information is used to indicate a reference position of a starting PRB index of at least one hop of the uplink transmission, such as the first hop and/or the second hop.

Optionally, the indication information includes fourth indication information, and the fourth indication information is used to indicate a frequency hopping offset of an a^{th} hop of the uplink transmission relative to a b^{th} hop thereof, where a and b are positive integers.

Optionally, the indication information is carried by downlink control information (DCI).

Further, the DCI is either of the following:
DCI for scheduling the uplink transmission; and
layer 1 signaling, where a sending time of the layer 1 signaling is before a sending time of the uplink transmission, and a predetermined time interval requirement is met between the layer 1 signaling and the uplink transmission.

The following describes this application in detail by assuming that an uplink transmission is a PUCCH transmission, but this is not limited.

### Embodiment 1

In Embodiment 1, a base station dynamically indicates whether to perform frequency hopping. For example, a frequency hopping type (inter-slot (inter-slot) or intra-slot (intra-slot)) of a PUCCH and starting PRB indexes of a first hop and a second hop are configured by using higher layer signaling such as RRC signaling. For example, startingPRB represents the starting PRB index of the first hop, secondHopPRB represents the starting PRB index of the second hop, and DCI is used to dynamically indicate whether to perform frequency hopping for the PUCCH, or enable/disable PUCCH frequency hopping (enable/disable PUCCH frequency hopping). When the DCI is used to dynamically indicate whether to perform frequency hopping for the PUCCH, an added indication field in the DCI may be used for indicating, or an existing indication field (that is, the indication field is reinterpreted) in the DCI may be reused or used again for indicating, or specific values of some fields in the DCI may be used for indicating. A terminal enables PUCCH frequency hopping in frequency domain only when the DCI indicates frequency hopping, that is, enable; otherwise, the terminal disables the PUCCH frequency hopping function in frequency domain, that is, there is no PUCCH frequency hopping. In this case, a PRB in which the PUCCH is located may be determined based on the startingPRB, or determined based on the secondHopPRB. Alternatively, a PRB in which the PUCCH is located may be determined based on a slot or sub-slot in which the PUCCH is located and the startingPRB or secondHopPRB. For example, if an index of the slot or sub-slot in which the PUCCH is located is an even number, the PRB in which the PUCCH is located is determined based on the startingPRB, but if the index of the slot or sub-slot in which the PUCCH is located is an odd number, the PRB in which the PUCCH is located is determined based on the secondHopPRB; or conversely, if the index of the slot or sub-slot in which the PUCCH is located is an odd number, the PRB in which the PUCCH is located is determined based on the startingPRB, but if the index of the slot or sub-slot in which the PUCCH is located is an even number, the PRB in which the PUCCH is located is determined based on the secondHopPRB.

Optionally, the DCI may be DCI for scheduling the PUCCH. The PUCCH is a dynamically scheduled PUCCH, for example, is a HARQ-ACK PUCCH that feeds back a physical downlink shared channel (Physical Downlink Shared Channel, PDSCH) scheduled by a corresponding physical downlink control channel (Physical Downlink Control Channel, PDCCH), or instructs a secondary cell (Scell) to sleep, or instructs to release a semi-persistent (Semi-Persistent Scheduling, SPS) PDSCH, or triggers a PDCCH of a type (type) 3 or enhanced type 3 codebook, or the like. For a PUCCH that is not scheduled by a corresponding PDCCH, such as a CSI PUCCH or an SR PUCCH, a frequency hopping mode is configured by RRC.

Alternatively, the DCI may be a UL grant or group common DCI, or DCI dedicated to indicating PUCCH frequency hopping. In this case, the PUCCH is not necessarily the PUCCH scheduled by the DCI. The PUCCH may be PUCCHs of all types after a specific time interval after DCI reception, such as a HARQ-ACK PUCCH, a CSI PUCCH, and/or an SR PUCCH, or a PUCCH of a preconfigured or predefined type. The specific time interval may be 0, or a value determined based on a predefined manner. Optionally, the specific time interval is related to capabilities of the terminal.

Optionally, the DCI may further indicate a PUCCH frequency hopping type. PUCCH frequency hopping types may include two types: intra-slot (intra-slot) and inter-slot (inter-slot), where intra-slot represents frequency hopping within a time unit, and inter-slot represents frequency hopping between time units.

### Embodiment 2

In Embodiment 2, a base station dynamically indicates a frequency hopping position. For example, the base station may configure N index pairs of a first hop PRB index and a second hop PRB index by using higher layer signaling such as RRC signaling. startingPRB represents a starting PRB index of a first hop, and secondHopPRB represents a starting PRB index of a second hop, as shown in the following Table 1. Although a value of N is 4 in Table 1, the value is not limited in this embodiment. Further, the base station may indicate the frequency hopping position during PUCCH frequency hopping by using DCI. For example, the DCI may include ceil(log₂(N)) bit indication information to indicate the frequency hopping position during PUCCH frequency hopping; or the DCI may include ceil(log₂(1+N)) bit indication information to indicate the frequency hopping position during PUCCH frequency hopping and whether to perform frequency hopping. For example, based on Table 1, when ceil(log2(1+N)) bit indication information is used for indicating, because ceil(log₂(1+N)) = ceil(log₂(1+4)) = 2, "00" may indicate no frequency hopping, "01" may indicate that the base station configures a first frequency hopping PRB index pair in Table 1, "10" may indicate that the base station configures a second frequency hopping PRB index pair in Table 1, and "11" may indicate that the base station configures a third frequency hopping PRB index pair in Table 1. Ceil(X) means rounding X up.

**Table 1**

| FH pair index | startingPRB | secondHopPRB |
|---|---|---|
| 0 | startingPRB0 | secondHopPRB0 |
| 1 | startingPRB1 | secondHopPRB1 |
| 2 | startingPRB2 | secondHopPRB2 |
| 3 | startingPRB3 | secondHopPRB3 |

Alternatively, the base station may configure a starting PRB index of a first hop of a PUCCH and configure a starting PRB index of a second hop of M PUCCHs by using higher layer signaling. Further, the base station indicates a starting PRB index of a second hop of the PUCCH by using DCI. For example, the DCI may include ceil(log₂(M)) bit indication information to indicate the starting PRB index of the second hop of the PUCCH. Certainly, ceil(log₂(1+M)) bit indication information may also be used herein to indicate the starting PRB index of the second hop of the PUCCH and whether to perform frequency hopping. Similarly, the base station may also configure the starting PRB index of the second hop of the PUCCH by using higher layer signaling, and indicate the starting PRB index of the first hop of the PUCCH by using DCI.

It should be noted that in addition to the configuration or indication of the starting PRB index of the first hop or the second hop of the PUCCH, it is also possible to configure or indicate the starting PRB index of the first hop of the PUCCH and an offset value PRB offset, where the PRB offset represents a PRB offset of the second hop relative to the first hop. Afterward, the terminal may determine the starting PRB index of the second hop based on the starting PRB index of the first hop and the offset value.

### Embodiment 3

In Embodiment 3, a base station configures a semi-persistent time domain uplink or downlink slot format. For example, a time domain SFI configures uplink and downlink transmission directions in time domain, such as uplink UL, downlink DL, and flexible (flexible) slots or symbols. The DL and/or UL configured semi-statically in time domain may include a DL/UL slot/symbol configured by using at least one of the following signaling:
(1) time domain tdd-UL-DL-ConfigurationCommon;
(2) time domain tdd-UL-DL-ConfigurationDedicated;
(3) a semi-persistent downlink transmission configured by using higher layer signaling or RRC signaling, where for example, a symbol resource in which a PDCCH, a PDSCH, and/or a CSI-RS, or the like is located is a DL symbol;
(4) a semi-persistent uplink transmission configured by using higher layer signaling or RRC signaling, where for example, a symbol resource in which an SRS, a PUSCH, a PUCCH, and/or a PRACH, or the like is located is a UL symbol;
(5) ssb-PositionsInBurst in a system information block SIB1 or ssb-PositionsInBurst in ServingCellConfigCommon indicates that a symbol resource in which an SSB sent to a terminal is located is a DL symbol; and
(6) a symbol resource in which a control resource set (control resource set, CORESET for short) configured by pdcch-ConfigSIB 1 in a master information block (Master Information Block, MIB) and used for a Type0-PDCCH CSS is a DL symbol.

In some embodiments, for a flexible/full duplex system, the base station may further configure frequency format information, for example, a frequency format indicator (frequency format indicator, FFI). By using the frequency format information, the base station may configure uplink and downlink directions for different frequency resources at the same time.

In some embodiments, semi-static signaling such as TDD-UL-DL-ConfigurationCommon and/or TDD-UL-DL-ConfigDedicated may be used to configure a slot or symbol as uplink UL, downlink DL, or flexible F. As shown in FIG. 4, slots 0 to 6 are all configured as DL slots, and slot 7 is configured as a UL slot. As shown in FIG. 5, slots 0 to 2 are all configured as DL slots, slots 2 to 6 are all configured as flexible slots, and slot 7 is configured as a UL slot.

In some embodiments, in the flexible/full duplex system, the terminal may further receive other higher layer signaling or dynamic signaling, for example, frequency format indicator information FFI, used to indicate which RBs/RB sets/RB groups/sub-BWPs/sub-bands/FRs (for simplicity, the following frequency domain resource/granularity is represented by an RB set) in a BWP are DL/UL/F. In this case, based on the configuration signaling for performing uplink and downlink configurations for different frequency resources, the terminal may determine uplink and downlink direction configurations of different RB sets at different times or uplink and downlink direction configurations of different RB sets at the same time.

For example, for the uplink and downlink configurations shown in FIG. 4, the base station may change, by using other signaling, the DL/UL/F slot/symbol configured by TDD-UL-DL-ConfigurationCommon and/or TDD-UL-DL-ConfigDedicated. As shown in FIG. 5, the base station may perform uplink and downlink configurations for different frequency resources by using higher layer signaling or dynamic signaling, where in slots 2 to 6, the base station configures a transmission direction of at least one of RB sets 0 to 3. For example, for slot 2, RB sets 0, 2, and 3 are indicated as DL, and RB set 1 is indicated as UL; for slot 5, indications are contrary, that is, RB sets 0, 2, and 3 are indicated as UL, and RB set 1 is indicated as DL; remaining slots are similar and are not described.

Optionally, the terminal may determine a frequency hopping position of a PUCCH based on a frequency domain resource type of a time unit or symbol in which the PUCCH is located. For example, with reference to FIG. 5, if the PUCCH is transmitted in slot 2, because only RB set 1 is a UL resource, the terminal can only send an uplink transmission in RB set 1. In this case, there is no downlink reception on the UL resource at the same time. In this case, to ensure that the PUCCH can be transmitted as far as possible, a configured starting PRB index of the PUCCH may be relative to a starting position of a UL resource available in the slot/symbol in which the PUCCH is located. For example, startingPRB and secondHopPRB are indexes relative to the starting PRB of RB set 1. If available UL resources in frequency domain are different for a plurality of symbols in which the PUCCH is located, the terminal may use a frequency domain configuration of a first/last symbol or a starting PRB index of a narrowest frequency domain bandwidth for reference.

The frequency hopping method for an uplink transmission according to the embodiments of this application may be performed by a frequency hopping apparatus for an uplink transmission. A frequency hopping apparatus for an uplink transmission according to the embodiments of this application is described by assuming that the frequency hopping method for an uplink transmission is performed by the frequency hopping apparatus for an uplink transmission in the embodiments of this application.

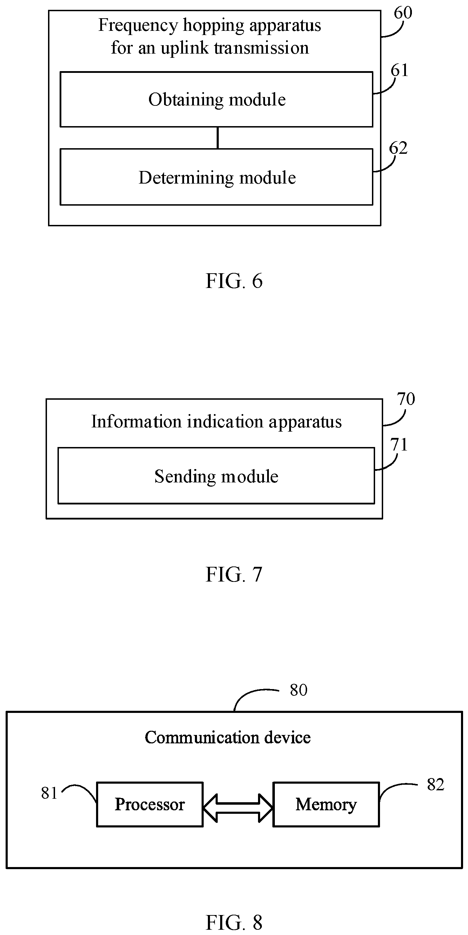

FIG. 6 is a schematic structural diagram of a frequency hopping apparatus for an uplink transmission according to an embodiment of this application. The apparatus is applied to a terminal. As shown in FIG. 6, the frequency hopping apparatus 60 for an uplink transmission includes:
an obtaining module 61, configured to obtain first information; and
a determining module 62, configured to determine, based on the first information, whether to perform frequency hopping for the uplink transmission, and/or determine, based on the first information, information related to a frequency hopping position when frequency hopping is performed for the uplink transmission, where
the first information includes at least one of the following:
   indication information of a network-side device; and
   configuration information of a frequency domain resource type.

Optionally, the indication information includes first indication information, and the first indication information is used to indicate whether to perform frequency hopping for the uplink transmission.

Optionally, the indication information includes second indication information, and the second indication information is used to indicate a starting PRB index of at least one hop of the uplink transmission.

Optionally, the second indication information is used to indicate a starting PRB index of an m^{th} hop of the uplink transmission, where the m^{th} hop is at least one of all hops of the uplink transmission, the starting PRB index of the m^{th} hop is at least one of a plurality of PRB indexes configured for the terminal, and m is a positive integer; or
the second indication information is used to indicate a starting PRB index combination of at least two hops of the uplink transmission, where the starting PRB index combination of the at least two hops is one of a plurality of PRB index combinations configured for the terminal.

Optionally, the indication information includes third indication information, and the third indication information is used to indicate a reference position of a starting PRB index of at least one hop of the uplink transmission.

Optionally, the indication information includes fourth indication information, and the fourth indication information is used to indicate a frequency hopping offset of an a^{th} hop of the uplink transmission relative to a b^{th} hop thereof, where a and b are positive integers.

Optionally, the indication information is carried by downlink control information DCI.

Optionally, the DCI is either of the following:
DCI for scheduling the uplink transmission; and
layer 1 signaling, where a sending time of the layer 1 signaling is before a sending time of the uplink transmission, and a predetermined time interval requirement is met between the layer 1 signaling and the uplink transmission.

Optionally, the first information includes the configuration information of the frequency domain resource type; and the determining, based on the first information, whether to perform frequency hopping for the uplink transmission, and/or determining, based on the first information, information related to a frequency hopping position when frequency hopping is performed for the uplink transmission includes:
determining a starting PRB index of a first hop and/or a second hop of the uplink transmission based on the configuration information of the frequency domain resource type; and/or
determining a frequency hopping offset of a second hop of the uplink transmission relative to a first hop thereof based on the configuration information of the frequency domain resource type.

Optionally, the reference position of the starting PRB index is any one of the following:
a lowest PRB index of a current bandwidth part BWP and/or carrier;
a lowest PRB index of an available uplink resource; and
a highest PRB index of the available uplink resource, where
a time-frequency domain resource type of the available uplink resource is configured as uplink and/or flexible.

Optionally, the determining module 62 is specifically configured to perform at least one of the following:
determining, for each uplink transmission, the information related to the frequency hopping position when frequency hopping is performed for the uplink transmission;
determining, for each time unit, the information related to the frequency hopping position when frequency hopping is performed for the uplink transmission; and
determining, for each repetition of the uplink transmission, the information related to the frequency hopping position when frequency hopping is performed for the uplink transmission.

Optionally, the determining module 62 is further configured to: determine, based on configuration information of the network-side device, whether to perform frequency hopping for the uplink transmission.

Optionally, the frequency hopping apparatus 60 for an uplink transmission further includes:
an execution module, configured to perform at least one of the following in a case that a frequency domain resource at an n^{th} hop of the uplink transmission is unavailable:
determining that the frequency domain resource is incorrectly configured or scheduled;
abandoning transmitting the n^{th} hop;
abandoning the uplink transmission;
delaying the transmission of the n^{th} hop in time to a next available frequency domain resource; and
translating the transmission of the n^{th} hop in frequency domain to the next available frequency domain resource, where
n is a positive integer.

The frequency hopping apparatus 60 for an uplink transmission in this embodiment of this application may be an electronic device, for example, an electronic device with an operating system, or may be a component in an electronic device, for example, an integrated circuit or a chip. The electronic device may be a terminal or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The frequency hopping apparatus 60 for an uplink transmission according to this embodiment of this application can implement each process implemented by the method embodiment in FIG. 2, with the same technical effect achieved. To avoid repetition, details are not described herein again.

The information indication method provided in the embodiments of this application may be performed by an information indication apparatus. An information indication apparatus provided in the embodiments of this application is described by assuming that the information indication method is performed by the information indication apparatus in the embodiments of this application.

FIG. 7 is a schematic structural diagram of an information indication apparatus according to an embodiment of this application. The apparatus is applied to a network-side device. As shown in FIG. 7, the information indication apparatus 70 includes:
a sending module 71, configured to send indication information to a terminal,
where the indication information is used by the terminal to determine whether to perform frequency hopping for an uplink transmission, and/or determine information related to a frequency hopping position when frequency hopping is performed for the uplink transmission.

Optionally, the indication information includes first indication information, and the first indication information is used to indicate whether to perform frequency hopping for the uplink transmission.

Optionally, the indication information includes second indication information, and the second indication information is used to indicate a starting PRB index of at least one hop of the uplink transmission.

Optionally, the second indication information is used to indicate a starting PRB index of an m^{th} hop of the uplink transmission, where the m^{th} hop is at least one of all hops of the uplink transmission, the starting PRB index of the m^{th} hop is at least one of a plurality of PRB indexes configured for the terminal, and m is a positive integer; or
the second indication information is used to indicate a starting PRB index combination of at least two hops of the uplink transmission, where the starting PRB index combination of the at least two hops is one of a plurality of PRB index combinations configured for the terminal.

Optionally, the indication information includes third indication information, and the third indication information is used to indicate a reference position of a starting PRB index of at least one hop of the uplink transmission.

Optionally, the indication information includes fourth indication information, and the fourth indication information is used to indicate a frequency hopping offset of an a^{th} hop of the uplink transmission relative to a b^{th} hop thereof, where a and b are positive integers.

Optionally, the indication information is carried by downlink control information DCI.

Optionally, the DCI is either of the following:
DCI for scheduling the uplink transmission; and
layer 1 signaling, where a sending time of the layer 1 signaling is before a sending time of the uplink transmission, and a predetermined time interval requirement is met between the layer 1 signaling and the uplink transmission.

The information indication apparatus 70 provided in this embodiment of this application can implement each process implemented by the method embodiment in FIG. 3, with the same technical effect achieved. To avoid repetition, details are not described herein again.

Optionally, as shown in FIG. 8, an embodiment of this application further provides a communication device 80, including a processor 81 and a memory 82. The memory 82 stores a program or instructions capable of running on the processor 81. For example, when the communication device 80 is a terminal, and the program or instructions are executed by the processor 81, each step of the foregoing embodiment of the frequency hopping method for an uplink transmission is implemented, with the same technical effect achieved. When the communication device 80 is a network-side device, and the program or instructions are executed by the processor 81, each step of the foregoing embodiment of the information indication method is implemented, with the same technical effect achieved. To avoid repetition, details are not described herein again.

An embodiment of this application further provides a terminal, including a processor and a communication interface. The processor is configured to: obtain first information; and determine, based on the first information, whether to perform frequency hopping for an uplink transmission, and/or determine, based on the first information, information related to a frequency hopping position when frequency hopping is performed for the uplink transmission, where the first information includes at least one of the following: indication information of a network-side device; and configuration information of a frequency domain resource type. The terminal embodiment corresponds to the foregoing terminal-side method embodiment, and each implementation process and implementation of the foregoing method embodiment can be applied to the terminal embodiment, with the same technical effect achieved.

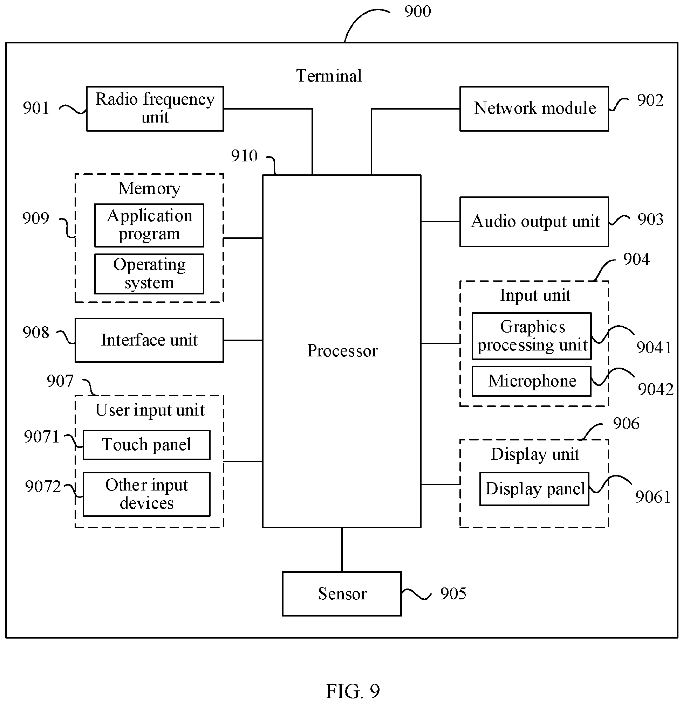

Specifically, FIG. 9 is a schematic diagram of a hardware structure of a terminal for implementing an embodiment of this application.

The terminal 900 includes but is not limited to at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (for example, a battery) supplying power to all components. The power supply may be logically connected to the processor 910 through a power management system. In this way, functions such as charge management, discharge management, and power consumption management are implemented by using the power management system. The terminal structure shown in FIG. 9 does not constitute a limitation on the terminal. The terminal may include more or fewer components than those shown in the figure, or some components are combined, or component arrangements are different. Details are not described herein again.

It should be understood that, in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 901 may transmit the downlink data to the processor 910 for processing. In addition, the radio frequency unit 901 may send uplink data to the network-side device. Usually, the radio frequency unit 901 includes but is not limited to an antenna, an amplifier, a transceiver, a coupler, a low noise amplifier, a duplexer, and the like.

The memory 909 may be configured to store software programs or instructions and various data. The memory 909 may primarily include a first storage area for storing programs or instructions and a second storage area for storing data. The first storage area may store an operating system, an application program or instructions required by at least one function (such as an audio play function and an image play function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 909 in this embodiment of this application includes but is not limited to these and any other suitable types of memories.

The processor 910 may include one or more processing units. Optionally, the processor 910 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 910.

The processor 910 is configured to: obtain first information; and determine, based on the first information, whether to perform frequency hopping for an uplink transmission, and/or determine, based on the first information, information related to a frequency hopping position when frequency hopping is performed for the uplink transmission, where the first information includes at least one of the following: indication information of a network-side device; and configuration information of a frequency domain resource type.

The terminal 900 provided in this embodiment of this application can implement each process implemented by the method embodiment in FIG. 2, with the same technical effect achieved. To avoid repetition, details are not described herein again.

An embodiment of this application further provides a network-side device, including a processor and a communication interface. The communication interface is configured to send indication information to a terminal, where the indication information is used by the terminal to determine whether to perform frequency hopping for an uplink transmission, and/or determine information related to a frequency hopping position when frequency hopping is performed for the uplink transmission. The network-side device embodiment corresponds to the foregoing method embodiment of the network-side device, and each implementation process and implementation of the foregoing method embodiment can be applied to the network-side device embodiment, with the same technical effect achieved.

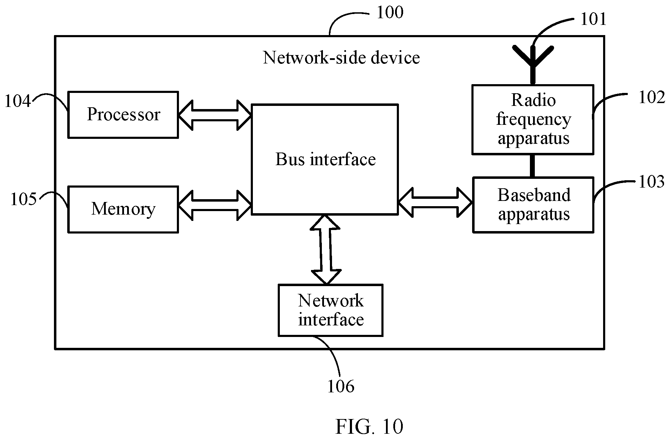

Specifically, an embodiment of this application further provides a network-side device. As shown in FIG. 10, the network-side device 100 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-sent information, and sends the information to the radio frequency apparatus 102; and the radio frequency apparatus 102 processes the received information and then sends the information out by using the antenna 101.

The method performed by the network-side device in the foregoing embodiment may be implemented in the baseband apparatus 103. The baseband apparatus 103 includes a baseband processor.

The baseband apparatus 103 may include, for example, at least one baseband unit, where a plurality of chips are disposed on the baseband unit. As shown in FIG. 10, one of the chips is, for example, the baseband processor, connected to the memory 105 by using a bus interface, to invoke a program in the memory 105 to perform the operation of the network-side device shown in the foregoing method embodiment.

The network-side device may further include a network interface 106, where the interface is, for example, a common public radio interface (common public radio interface, CPRI).

Specifically, the network-side device 100 in this embodiment of the present invention further includes a program or instructions stored in the memory 105 and capable of running on the processor 104. When the processor 104 invokes the program or instructions in the memory 105, the method performed by each module shown in FIG. 7 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the frequency hopping method for an uplink transmission is implemented, or each process of the foregoing embodiment of the information indication method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the frequency hopping method for an uplink transmission or implement each process of the foregoing embodiment of the information indication method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program product. The computer program product is stored in a storage medium. The computer program product is executed by at least one processor to implement each process of the foregoing embodiment of the frequency hopping method for an uplink transmission or implement each process of the foregoing embodiment of the information indication method, with the same technical effect achieved. To avoid repetition, details are not described herein again.

An embodiment of this application further provides a communications system, including a terminal and a network-side device. The terminal may be configured to perform the steps of the foregoing frequency hopping method for an uplink transmission. The network-side device may be configured to perform the steps of the foregoing information indication method.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A frequency hopping method for an uplink transmission, comprising:
obtaining, by a terminal, first information; and
determining, by the terminal based on the first information, whether to perform frequency hopping for the uplink transmission, and/or determining, based on the first information, information related to a frequency hopping position when frequency hopping is performed for the uplink transmission, wherein
the first information comprises at least one of the following:
indication information of a network-side device; and
configuration information of a frequency domain resource type.

2. The method according to claim 1, wherein the indication information comprises first indication information, and the first indication information is used to indicate whether to perform frequency hopping for the uplink transmission.

3. The method according to claim 1, wherein the indication information comprises second indication information, and the second indication information is used to indicate a starting physical resource block PRB index of at least one hop of the uplink transmission.

4. The method according to claim 3, wherein the second indication information is used to indicate a starting PRB index of an m^{th} hop of the uplink transmission, wherein the m^{th} hop is at least one of all hops of the uplink transmission, the starting PRB index of the m^{th} hop is at least one of a plurality of PRB indexes configured for the terminal, and m is a positive integer;
or
the second indication information is used to indicate a starting PRB index combination of at least two hops of the uplink transmission, wherein the starting PRB index combination of the at least two hops is one of a plurality of PRB index combinations configured for the terminal.

5. The method according to claim 1, wherein the indication information comprises third indication information, and the third indication information is used to indicate a reference position of a starting PRB index of at least one hop of the uplink transmission.

6. The method according to claim 1, wherein the indication information comprises fourth indication information, and the fourth indication information is used to indicate a frequency hopping offset of an a^{th} hop of the uplink transmission relative to a b^{th} hop thereof, wherein a and b are positive integers.

7. The method according to any one of claims 1 to 6, wherein the indication information is carried by downlink control information DCI.

8. The method according to claim 7, wherein the DCI is either of the following:
DCI for scheduling the uplink transmission; and
layer 1 signaling, wherein a sending time of the layer 1 signaling is before a sending time of the uplink transmission, and a predetermined time interval requirement is met between the layer 1 signaling and the uplink transmission.

9. The method according to claim 1, wherein the first information comprises the configuration information of the frequency domain resource type; and the determining, based on the first information, whether to perform frequency hopping for the uplink transmission, and/or determining, based on the first information, information related to a frequency hopping position when frequency hopping is performed for the uplink transmission comprises:
determining, by the terminal, a starting PRB index of a first hop and/or a second hop of the uplink transmission based on the configuration information of the frequency domain resource type;
and/or
determining, by the terminal, a frequency hopping offset of a second hop of the uplink transmission relative to a first hop thereof based on the configuration information of the frequency domain resource type.

10. The method according to claim 5 or 9, wherein the reference position of the starting PRB index is any one of the following:
a lowest PRB index of a current bandwidth part BWP and/or carrier;
a lowest PRB index of an available uplink resource; and
a highest PRB index of the available uplink resource, wherein
a time-frequency domain resource type of the available uplink resource is configured as uplink and/or flexible.

11. The method according to claim 1, wherein the determining, based on the first information, information related to a frequency hopping position when frequency hopping is performed for the uplink transmission comprises at least one of the following:
determining, by the terminal for each uplink transmission, the information related to the frequency hopping position when frequency hopping is performed for the uplink transmission;
determining, by the terminal for each time unit, the information related to the frequency hopping position when frequency hopping is performed for the uplink transmission; and
determining, by the terminal for each repetition of the uplink transmission, the information related to the frequency hopping position when frequency hopping is performed for the uplink transmission.

12. The method according to claim 1, wherein the method further comprises:
determining, by the terminal based on configuration information of the network-side device, whether to perform frequency hopping for the uplink transmission.

13. The method according to claim 1, wherein the method further comprises:
in a case that a frequency domain resource at an n^{th} hop of the uplink transmission is unavailable, performing, by the terminal, at least one of the following:
determining that the frequency domain resource is incorrectly configured or scheduled;
abandoning transmitting the n^{th} hop;
abandoning the uplink transmission;
delaying the transmission of the n^{th} hop in time to a next available frequency domain resource; and
translating the transmission of the n^{th} hop in frequency domain to the next available frequency domain resource, wherein
n is a positive integer.

14. A frequency hopping method for an uplink transmission, comprising:
sending, by a network-side device, indication information to a terminal, wherein
the indication information is used by the terminal to determine whether to perform frequency hopping for the uplink transmission, and/or determine information related to a frequency hopping position when frequency hopping is performed for the uplink transmission.

15. The method according to claim 14, wherein the indication information comprises first indication information, and the first indication information is used to indicate whether to perform frequency hopping for the uplink transmission.

16. The method according to claim 14, wherein the indication information comprises second indication information, and the second indication information is used to indicate a starting PRB index of at least one hop of the uplink transmission.

17. The method according to claim 16, wherein the second indication information is used to indicate a starting PRB index of an m^{th} hop of the uplink transmission, wherein the m^{th} hop is at least one of all hops of the uplink transmission, the starting PRB index of the m^{th} hop is at least one of a plurality of PRB indexes configured for the terminal, and m is a positive integer;
or
the second indication information is used to indicate a starting PRB index combination of at least two hops of the uplink transmission, wherein the starting PRB index combination of the at least two hops is one of a plurality of PRB index combinations configured for the terminal.

18. The method according to claim 14, wherein the indication information comprises third indication information, and the third indication information is used to indicate a reference position of a starting PRB index of at least one hop of the uplink transmission.

19. The method according to claim 14, wherein the indication information comprises fourth indication information, and the fourth indication information is used to indicate a frequency hopping offset of an a^{th} hop of the uplink transmission relative to a b^{th} hop thereof, wherein a and b are positive integers.

20. The method according to any one of claims 14 to 19, wherein the indication information is carried by downlink control information DCI.

21. The method according to claim 20, wherein the DCI is either of the following:
DCI for scheduling the uplink transmission; and
layer 1 signaling, wherein a sending time of the layer 1 signaling is before a sending time of the uplink transmission, and a predetermined time interval requirement is met between the layer 1 signaling and the uplink transmission.

22. A frequency hopping apparatus for an uplink transmission, comprising:
an obtaining module, configured to obtain first information; and
a determining module, configured to determine, based on the first information, whether to perform frequency hopping for the uplink transmission, and/or determine, based on the first information, information related to a frequency hopping position when frequency hopping is performed for the uplink transmission, wherein
the first information comprises at least one of the following:
indication information of a network-side device; and
configuration information of a frequency domain resource type.

23. An information indication apparatus, comprising:
a sending module, configured to send indication information to a terminal, wherein the indication information is used by the terminal to determine whether to perform frequency hopping for an uplink transmission, and/or determine information related to a frequency hopping position when frequency hopping is performed for the uplink transmission.

24. A terminal, comprising a processor and a memory, wherein the memory stores a program or instructions capable of running on the processor, and when the program or instructions are executed by the processor, the steps of the frequency hopping method for an uplink transmission according to any one of claims 1 to 13 are implemented.

25. A network-side device, comprising a processor and a memory, wherein the memory stores a program or instructions capable of running on the processor, and when the program or instructions are executed by the processor, the steps of the information indication method according to any one of claims 14 to 21 are implemented.

26. A readable storage medium, wherein the readable storage medium stores a program or instructions, and when the program or instructions are executed by a processor, the steps of the frequency hopping method for an uplink transmission according to any one of claims 1 to 13 are implemented, or the steps of the information indication method according to any one of claims 14 to 21 are implemented.
